# EUROPEAN PATENT APPLICATION

(11) **EP 1 143 687 A2**
(43) Date of publication of application: **10.10.2001**
(21) Application number: 01301812.2
(22) Date of filing: 28.02.2001
(51) Int. Cl.: H04M 1/02, B29C 45/14

(54) **Portable electronic apparatus**

(30) Priority: 05.04.2000 GB 0008406
(71) Applicant: NOKIA MOBILE PHONES LTD., 02150 Espoo (FI)
(72) Inventor: Wilson, Simon, Reading, Berkshire RG30 2EN (GB)
(74) Representative: Geary, Stuart Lloyd

(57) **Abstract**

A portable electronic apparatus (1) has a one-piece cover which is moulded directly onto the internal components of the apparatus (2, 3, 15).

## Description

The present invention relates to a portable electronic apparatus including a cover and an assembly including substantially all of the apparatus's circuitry and a method of manufacturing a portable electronic apparatus..

Conventionally, portable electronic apparatuses, such as mobile telephones, are made with a multi-piece cover. The cover parts are moulded as separate items, notwithstanding that they may be attached by sprues during the actual moulding process. These cover parts are then held by screws or other fastening means to each other and/or to a chassis.

When an apparatus having this form of construction is dropped or otherwise subjected to a shock, the casing is often damaged, literally coming apart at the seams. Another problem is the ingress of water at the seams. This means that special seals must be used to make a waterproof device.

A portable eletronic apparatus according to the present invention characterised in that the cover is a one-piece moulding and said assembly is embedded within the cover.

According to the present invention, there is also provided a portable electronic apparatus comprising a one-piece cover. If the cover is a monocoque, the one-piece cover allows for better distribution of the forces of impact reducing the risk of cracking where the cover is formed from non-elastomeric materials.

The lack of seams between cover parts in apparatus according to the present invention reduces or removes the possibility of the ingress of water when compared with conventional designs.

The cover is preferably moulded from a polymer material such as a thermoplastic elastomer, e.g Santoprene from Advanced Elastomer Systems, or a self-skinning foam polymer material, e.g. a cellular urethane. However, any material that can be moulded and otherwise processed at temperatures that do not harm the electronic components of the apparatus can be used, even concrete is a possibility.

The cover may have an aperture revealing a display and/or a manually operable electronic input device. Preferably, the input device comprises a pushbutton. Rotary controls are undesirable for waterproof products because some form of reliable waterproof seal between the moving part of the control and the cover material is required.

An electrical contact may be embedded within the material of the cover for connecting a circuit inside the cover to an external circuit. Means, for example a diode, is preferably provided for preventing discharging of an internal rechargeable battery in the event of short between battery charging contacts embedded in the cover, such as may occur if the apparatus is immersed in water. A disposable battery powered device would not need such a contact for obtaining operating power.

Preferably, an apparatus according to the present invention includes a user interface assembly, comprising a window and the keys of a keypad, and a printed circuit board, having electronic components including a display device mounted thereto, and the user interface assembly is glued to the printed circuit board such that the window is aligned with the display device and the whole is substantially embedded within cover.

The present invention may be applied to a portable radio device, for instance a mobile telephone.

According to the present invention, there is provided a method of manufacturing a preferred portable electronic apparatus. This method comprises placing a sub-assembly, including an electronic circuit, in a mould and injecting a polymer material into the mould such that the sub-assembly is substantially embedded in the polymer material.

The cover is preferably moulded from a thermoplastic elastomer, e.g Santoprene from Advanced Elastomer Systems or a self-skinning foam polymer material, e.g. a cellular urethane.

The sub-assembly may be placed in contact with a feature of a wall of the mould so that an aperture is formed in the moulded polymer material. More preferably, the sub-assembly includes a display and the sub-assembly is placed in contact with a feature of a wall of the mould such that the display is visible through the aperture. Still more preferably, the sub-assembly includes a manually operable electronic input device and the sub-assembly is placed in contact with a feature of a wall of the mould such that the input device is operable through the aperture.

The sub-assembly and the mould may be configured such that an electrical contact is held within the polymer material after moulding for connecting said circuit to an external circuit.

A preferred method includes gluing a user interface assembly, comprising a window and the keys of a keypad to a printed circuit board, having electronic components including a display device mounted thereto, to form said sub-assembly.

The present invention is suited to the manufacture of portable radio devices, for example mobile telephones.

An embodiment of the present invention will now be described, by way of example, with reference to the accompanying drawings, in which: -
Figure 1 is a front view of a mobile telephone according to the present invention;
Figure 2 is a sectional view, along the dashed line in Figure 1, of a mobile telephone according to the present invention;
Figure 3 is a diagram illustrating a manufacturing process for producing as mobile telephone as shown in Figure 1; and
Figure 4 shows the cover of the mobile telephone of Figure 1 being moulded.

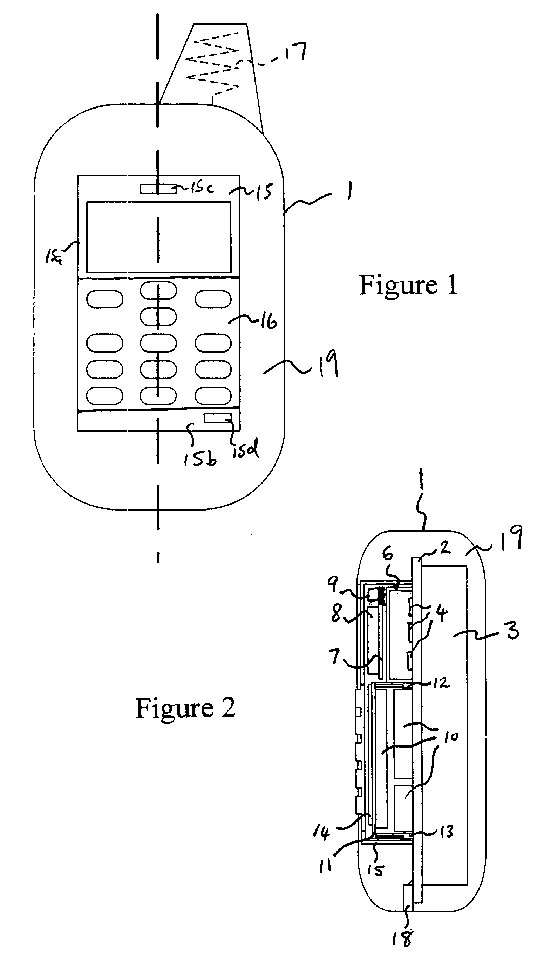

Referring to Figures 1 and 2, a mobile telephone 1 is formed around a central, rigid rectangular main printed circuit board 2. In each elevation, the mobile telephone 1 is a rounded rectangle, the height being the largest dimension and the depth from front to back being the smallest dimension. The main printed circuit board 2 lies parallel to the face of the mobile telephone 1.

A rechargeable battery 3 is glued to the back face of the main printed circuit board 2. The rf circuitry components 4 of the mobile telephone 1 are mounted to an upper region of the front face of the main printed circuit board 2 and enclosed within a shielding enclosure 6 which is soldered to the main printed circuit board 2. A first subsidiary pcb 7 is mounted over the front face of the enclosure 6. A liquid crystal display 8 and a small loudspeaker 9 are mounted to the first subsidiary pcb 7 with the loudspeaker 9 above the display 8.

Baseband and control circuitry components 10 are mounted to the front face of the main printed circuit board 2 below the enclosure 6 and to the back face of a second subsidiary pcb 11. The second subsidiary pcb 11 lies parallel to the main printed circuit board 2 and in front of it. The second subsidiary pcb 11 connected physically and electrically to the main printed circuit board 2 by multiway connectors 12, 13 at its top and bottom ends.

The fixed elements 14 of a membrane keypad are formed on the front face of the second subsidiary pcb 11 and a small microphone (not shown) is mounted in the bottom right corner of the second subsidiary pcb 11.

The first and second subsidiary printed circuit boards 7, 8 are enclosed by a generally box-shaped frame 15 which is open at the back and glued to the main printed circuit board 2. The four side walls, the upper part of the front wall and a small portion along the bottom of the front wall of the frame 15 are moulded in one piece from a transparent, stiff polymer such as polycarbonate or an acrylate polymer. The region between the upper part 15a of the front wall and the small portion along the bottom 15b of the front wall is filled with an elastomeric moulding 16. The elastomeric moulding 16 is shaped to provide the buttons for the membrane keypad.

The frame 15 has small apertures 15c, 15d aligned with the loudspeaker and the microphone 7. These apertures are closed on the inside of the frame by a waterproof membrane such as is available under the trade name Gortex (RTM).

A helical antenna 17 projects from the upper edge of the main printed circuit board 2 and terminals 18 for connecting the battery 3 to an external charger (not shown) via a diode (not shown) to prevent discharging of the battery 3.

The main printed circuit board 2, the battery 3 and the frame 15, save for its front face, are embedded in a cellular urethane body 19 which give the mobile telephone 1 its form. The front of the frame 15 is not wholly free of the material of the body 19. The cellular urethane material extends a short distance over the margins of the front face of the frame 15 to form a watertight seal therewith. The cellular urethane body 19 also encompasses the antenna 17.

The manufacture of the mobile telephone 1 will now be described.

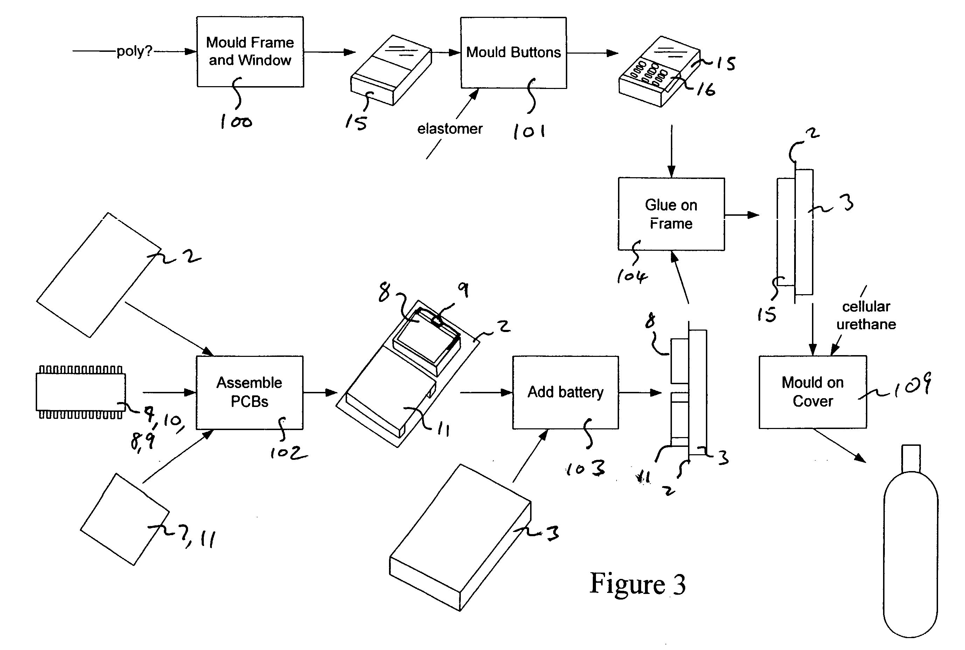

Referring to Figure 3, the frame 15 is moulded from polycarbonate in a first moulding operation 100. The frame 15 is then placed in another mould and an elastomeric material is injected and cured to form the elastomeric moulding 16 in a second moulding operation 101.

In parallel with the formation of the frame 15, the electronic components 4, 10, including the mobile telephone's SIM card, are mounted to the printed circuit boards 2, 7, 11 which are then assembled together with the enclosure 6 in a first assembly stage 102. The battery 3 is then glued to the back of the main printed circuit board 2 and its terminals solder to tracks on the main printed circuit board 2 in a second assembly step 103.

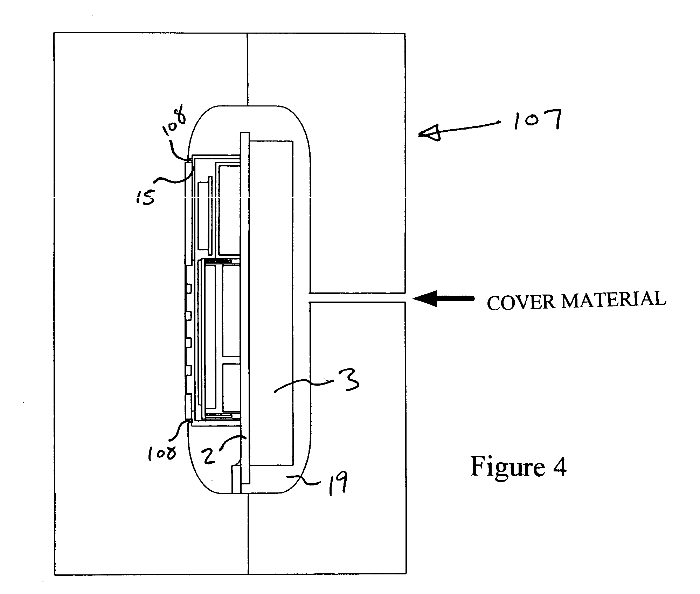

The printed circuit board assembly and the completed frame 15 are then glued together in a third assembly step 104. The assembled internals of the mobile telephone 1 are then placed in a mould 107 (see Figure 4) with the margins of the frame 15 pressing against a rectangular ridge 108. The mould 107 is then closed and a cellular urethane is injected in a third moulding process 109. The cellular urethane encompasses the internals of the mobile telephone 1 but is kept clear of the front of the frame 15 by the ridge 108. The internal structure of the cellular urethane body 19 is cellular however a smooth skin naturally forms over the external surface of the cellular urethane body 19.

In the foregoing description, the body 19 is moulded from one material. However, the body may be moulded as a plurality of layer, for example an inner cellular layer for absorbing impact forces and an non-cellular outer layer to provide an easy to clean surface.

## Claims

1. A portable electronic apparatus including a cover (19) and an assembly (2, 3, 15) including substantially all of the apparatus's circuitry, **characterised in that** the cover (19) is a one-piece moulding and said assembly (2, 3, 15) is embedded within the cover (19).

2. A portable electronic apparatus **characterised by** a one-piece cover (19).

3. An apparatus according to claim 1 or 2, wherein the cover (19) is moulded from a polymer material.

4. An apparatus according to claim 3, wherein the polymer material is a self-skinning foam polymer material.

5. An apparatus according to any preceding claim, wherein the cover (19) has an aperture revealing a display (8).

6. An apparatus according to claim 5, including a manually operable electronic input device (16), wherein said input device is located within said aperture.

7. An apparatus according to any one of claims 1 to 4, including a manually operable electronic input device (16), wherein said input device is located within an aperture in said cover (19).

8. An apparatus according to claim 2, including a circuit within the cover (19) and an electrical contact (18) within the material of the cover (19) for connecting said circuit to an external circuit.

9. An apparatus according to any preceding claim, including a user interface assembly (15, 16), comprising a window and the keys of a keypad, and a printed circuit board (2), having electronic components including a display device (8) mounted thereto, wherein the user interface assembly (15, 16) is glued to the printed circuit board (2) such that the window is aligned with the display device (8) and the whole is substantially embedded within the cover (19).

10. A portable radio device according to any preceding claim.

11. A mobile telephone according to claim 10.

12. A method of manufacturing a portable electronic apparatus, the method comprising placing a sub-assembly (2, 3, 15), including an electronic circuit, in a mould (107) and injecting a polymer material into the mould (107) such that the sub-assembly (2, 3, 15) is substantially embedded in the polymer material.

13. A method according to claim 12, wherein the polymer material comprises a self-skinning foam material.

14. A method according to claim 12 or 13, wherein the sub-assembly is placed in contact with a feature of a wall of the mould (107) so that an aperture is formed in the moulded polymer material.

15. A method according to claim 14, wherein the sub-assembly (2, 3, 15) includes a display (8) and the sub-assembly is placed in contact with a feature of a wall of the mould (107) such that the display (8) is visible through the aperture.

16. A method according to claim 14 or 15, wherein the sub-assembly (2, 3, 15) includes a manually operable electronic input device (16) and the sub-assembly (2, 3, 15) is placed in contact with a feature of a wall of the mould (107) such that the input device (16) is operable through the aperture.

17. A method according to any one of claims 12 to 16, wherein the sub-assembly (2, 3, 15) and the mould (107) are configured such that an electrical contact (18) is held within the polymer material after moulding for connecting said circuit to an external circuit.

18. A method according to any one of claim 12 to 17, including gluing a user interface assembly (15), comprising a window and the keys (16) of a keypad to a printed circuit board (2), having electronic components including a display device (8) mounted thereto, to form said sub-assembly (2, 3, 15).

19. A method of manufacturing a portable radio device, the method being in accordance with any one of claims 12 to 18.

20. A method of manufacturing a mobile telephone, the method being in accordance with claim 19.
